# EUROPEAN PATENT SPECIFICATION

(11) **EP 2 142 790 B1**
(45) Date of publication and mention of the grant of the patent: **17.11.2010**
(21) Application number: 08723946.3
(22) Date of filing: 29.01.2008
(51) Int. Cl.: F03B 13/18

(54) **A DEVICE FOR A WINCH-OPERATED WAVE-POWER PLANT**
VORRICHTUNG MIT EINER MIT EINER WINDE BETÄTIGTEN WELLENENERGIEANLAGE
DISPOSITIF POUR UNE CENTRALE HOULOMOTRICE ACTIONNÉE PAR UN TREUIL

(30) Priority: 17.04.2007 NO 20071963
(43) Date of publication of application: 13.01.2010
(73) Proprietor: Straumekraft AS, Sollia 42 5200 Os (NO)
(72) Inventor: STRAUME, Ingvald, N-2312 Ottestad (NO)
(74) Representative: Onsagers Ltd
(86) International application number: PCT/NO2008/000028
(87) International publication number: WO 2008/127116

(56) References cited:
- WO-A-03/058054
- US-A- 5 808 368
- US-A- 6 020 653
- US-A1- 2005 285 402

## Description

In the patent literature over 1000 devices are described for exploitation of ocean-wave energy. At one time it was not realized that a successful commercial exploitation of energy from ocean waves requires the plants to have one (or more) inherent or ancillary overload protection mechanism(s). Amongst developers of newer wave-power systems, however, more and more operators have been beginning to take this essential factor into consideration: in one way or another, the plants must include a strategy for tackling the encounter with the most extreme waves. The traditional manner of tackling this problem has been to provide the plants and the components therein with an extremely robust design. This has proved to be difficult, and insofar as it has succeeded, it has produced unprofitable wave-power plants. Some of the newer wave-power technologies, including mechanisms for overload protection, are as follows: Pelamis from the Scottish company Ocean Power Delivery Ltd. (www.ocepd.com), Danish Wave Dragon (www.wavedragon.dk) and US 5808368. The common feature of the overload protection mechanisms in these is that they are based on registration of sea state prior to implementation of overload protection measures, which have to be controlled manually or by means of computer technology, and that the overload protection measure can be described as analogous to what tortoises do when they withdraw their heads into their shell. These "tortoise strategies" involve the plant's energy-producing parts being reinforced, contracted or submerged under water, with the result that they no longer (or to a lesser extent) are exposed to the wave forces. At the same time the energy production comes to a stop or is greatly reduced.

US 2005/0285402 A1, which is considered as the closest prior art to the subject-matter of claim 1, discloses a device according to the preamble of claim 1.

In contrast to this, the type of wave-power plan described herein has an instant-acting overload protection mechanism based on simple mechanical principles, which does not require manual or computer control, and which does not put the plant temporarily out of operation. The overload protection mechanism makes the plant type robust, thereby permitting the plants to be designed for a greater degree of direct interaction with the waves (compared with e.g. Pelamis). This provides improved efficiency.

### Known technology on which the invention is based.

The invention is based on three elements:
1. Wave-power plant with floating body/bodies which absorb wave energy.
2. Winch **characterised in that** the end of the winch wire is secured to the cable drum in a manner which enables the wire to be wound out and in without there being any counter-corresponding wire end which has to be correspondingly wound in and out.
3. Overload-protection slip clutch which slips when the output which is being attempted to be channelled/directed into the system reaches the maximum level which the components in the system are designed to withstand.

Individually or only together in twos, the elements are not capable of solving the problem addressed by the invention described herein: to exploit energy from ocean waves with sufficiently low cost design of the plants without the plants and the components therein being destroyed by extreme waves. All three elements must be present in order to provide profitable exploitation of wave power. A combination of this kind will offer a substantial cost reduction for the plants, a cost reduction which is so great that it will probably involve a technical-commercial breakthrough for wave power as energy supply.

Some known technical solutions will now be listed where some of the above-mentioned elements are represented.

### Winch-operated wave-power plants

There are a number of wave-power systems where accumulation (absorption) of wave energy is conducted by floating bodies and where transmission of this energy is effected by wires attached to and wound in on a winch. See, e.g. US 2005/0121915 and GR 990100030. However, these lack the overload-protection slip clutch/connection or the like which is necessary to allow the plants to survive the encounter with the most extreme waves in the worst stormy episodes without requiring to have such a robust design that they become unprofitable.

### Slip clutch

The overload-protection slip clutch is a basic component in the invention. In principle such a slip clutch can be constructed in two ways:
Slip clutch type I: where the clutch slips when a specific angular velocity with regard to the clutch's rotation is exceeded.
Slip clutch type II: where the clutch slips when a specific torque is exceeded.

Since transmitted output is equal to the product of transmitted angular velocity and torque, both of these clutch types individually will act in such a manner that they set a threshold for the maximum amount of output that can be transmitted - provided that the machinery to which the output is transmitted is of such a commonplace nature that torque and angular velocity are functions of each other, with the result that the torque is constant at constant rotational velocity.

### Slip clutch (type I) for setting the threshold for rotational speed

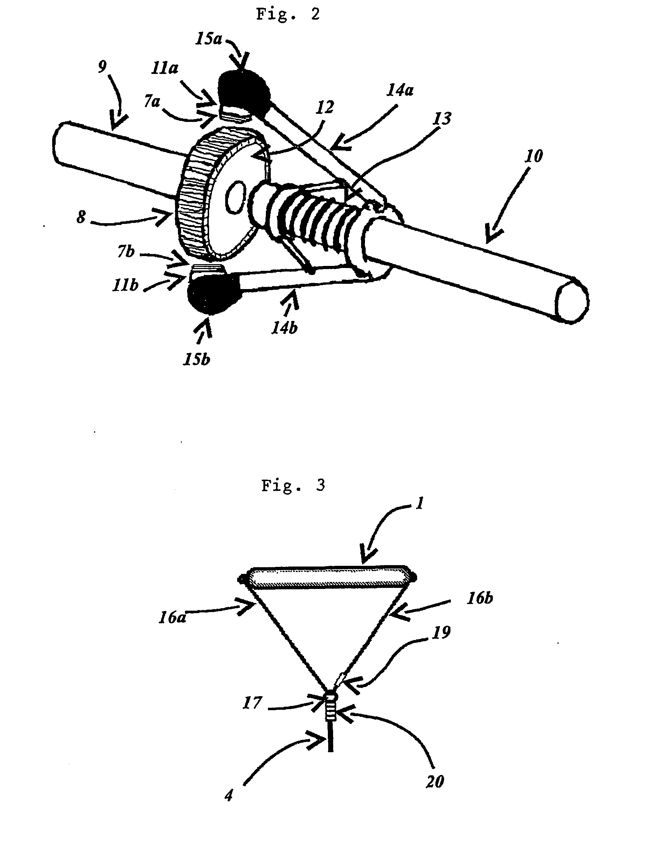

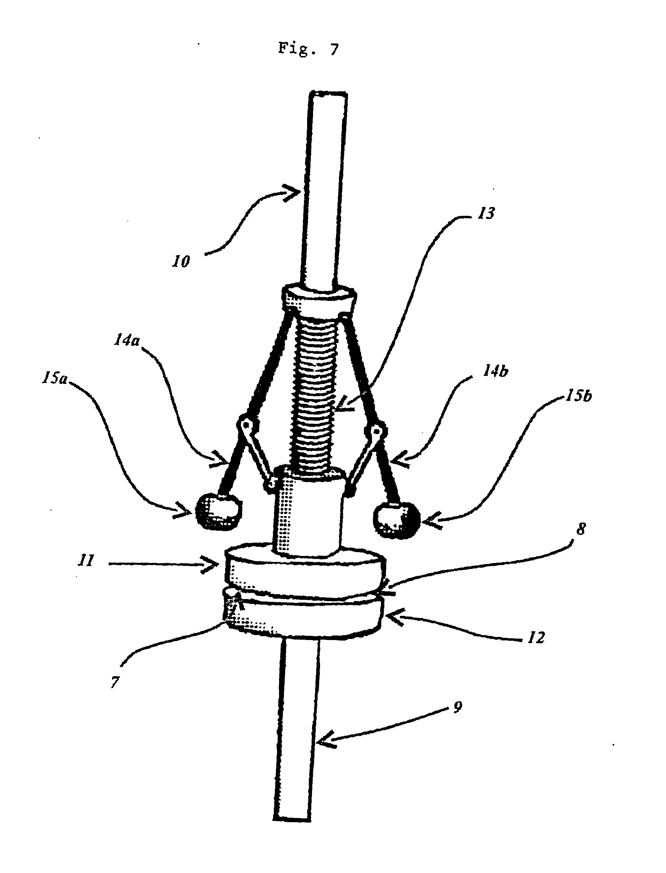

Two similar variants of the slip clutch type where the slipping is determined by the angular velocity are depicted in Figure 2 and Figure 7. In principle a slip clutch of this kind is a negative feedback mechanism composed of a speedometer and a clutch. It has a function which is closely related to the function of the flywheel governor in James Watt's original steam engine, where rotational speed over a specific precalibrated value resulted in the steam pressure from the boiler being discharged another way, thereby protecting the rotating parts (piston, crankshaft, flywheel, etc.) in the steam engine against overload in the form of too high speed.

There are components on the market, viz. a type of cam clutches, which amongst other things have the ability to disengage when the rotational speed is too high. At low speed a spring system ensures that the clutch is locked. Disengagement is determined by the centrifugal force on the cams which at high rotational speed overrides the spring force. Tsubakimoto Chain Co. is a supplier of such cam clutches, series type designation: BREU. See http://tsubakimoto.com and http://tsubakimoto.com/tem/pdf/CAM BREU.pdf.

### Winch with slip clutch (type II) for setting the threshold for torque

Connecting a winch to a transmission system containing a slip clutch which slips when the torque transmitted from the incoming axle exceeds a predetermined value is a technique used in sports fishing rods. A standard sports fishing rod reel has this particular functionality built into it: it slips if the line is jerked too hard. (In principle a sports fishing rod reel can be regarded as a winch). However, there is no known clutch which slips when the torque transmitted exceeds a specific threshold value, used or proposed for use in a winch-operated wave-power plant where the winch has the wire wound in on and secured to it.

### Wave-power plant with slip clutch (type II) for setting the threshold for torque

The idea of making a wave-power plant containing a slip clutch which slips when the torque exceeds a specific threshold value is mentioned in a German patent application from 1978: DE 2850293. The wave-power plant described in the German patent application is *not* winch-operated, but operated by a wire running one single time over a pulley, without the wire being attached to the pulley and without one being able to say that the wire is wound into the pulley as in the case of a winch. A substantial difference is involved herein. This substantial difference is based on the fact that, in contrast to a winch-secured wire, a wire which runs loosely over a pulley is dependent on a counterweight in the opposite end of the wire in order for the wire to be kept in position over the pulley. It also involves the wire being wound into the opposite end of the wire when the end which is connected to the wave absorption body is unwound, and vice versa. The physical dimensions of the system therefore necessarily become considerably larger, in at least one dimension. Whether the wire dangles loosely with a counterweight at the end, or the wire and the counterweight are built into a cylinder housing as in DE 2850293, the system will have a long, projecting movable part which is exposed to wind and waves, thereby making the system more vulnerable. Consequently it will be more expensive to design in a way that enables it to withstand the encounter with the forces of nature. On the other hand, a wire which is secured to and wound in on a cable drum permits a much more compact design at a lower cost, where the system is better protected against wind and waves.

### Other disengagement mechanisms used in connection with wave power

A patent publication, WO 96/30646, describes a wave-power plant with two floats (22 and 32) which are moved by the waves, each transmitting this movement via wires/cables (17 and 36) to a drum (16/28). From each of the drums two wire ends extend, each with a counterweight, a hanging weight (20/34). The arrangement is such that the weights have to be raised when the float pulls out its pair of wire ends, and vice versa: the weight is lowered, pulling back with it the pair of wires when the forces which caused the float to pull out the pair of wires at the opposite end become less than the mass of the weights. With such an arrangement it is impossible to wind all the wire in on the drum, as opposed to the winch described under patent claim 1 in the present patent application. The sum of the lengths of the pieces of wire attached to the weight (20/34) and the pieces of wire ending in the float (22/32) is constant. As in the case of DE 2850293, therefore, it can be established that such an arrangement does not result in the compact solution achieved with a winch where one end of the wire is attached to the cable drum (see patent claim 1), and which is necessary in order for a wave-power plant, without incurring unreasonably large design costs, to be capable of surviving the encounter with the at times extreme forces of the ocean waves in the event of storms and hurricanes. The arrangement in WO 96/30646 is at no point referred to as a winch. In this connection it may be described as an anchor windlass with a hanging weight at the opposite end of the wire, in the same way as DE 2850293.

WO 96/30646 mentions "slip clutches or other mechanical means" as a possible arrangement between shaft (12) and alternating current generator, alternator (54). No further description or account is given of these "slip clutches", neither of their design or arrangement. Only the purpose is mentioned. This purpose is quite different from overload protection, namely: to assist in keeping the rotational speed in the alternator (54) constant "regardless of the drive power produced by floats 22 and 32", in order that the current delivered by the alternator should be of such a quality with regard to switching frequency (±1 Hz, see line 3, page 6) that it can be fed directly into the electricity grid. Thus it is not a question of trying to limit the output from the waves into the restructuring machinery to any specific maximum threshold value, as is the object and function of the overload-protection slip clutch in the present patent application. Instead the object is to attempt to prevent the waves' varying motion from causing variable rotational speed in flywheel (52) and alternator (54). It is also clear that the author of WO 96/30646 has in no way considered the theme of overload protection.

Another patent publication, US 4228360, discloses a winch-operated wave-power plant with a self-tightening winch, containing a clutch (70) in the transmission system between cable drum (12) and a mechanical energy-storage system. The mechanical energy-storage system in US 4228360 comprises the following components in connection order from the cable drum:
- transfer gear (18)
- energy storage element (20) with related part components
- step-up gear system (42)
- flywheel (50)

The flywheel (50) is further connected to a generator. The flywheel is also connected to a flywheel governor (80) which regulates a clutch control (82). The clutch control (82) is an agent for disengaging the clutch (70), controlled by the flywheel governor (80). The cable drum (12) is therefore disengaged from the energy-storage system if the speed of the flywheel (50) exceeds a predefined threshold speed determined by the flywheel governor (80).

The purpose of the disengagement system in US 4228360 is not to ensure overload protection by providing a maximum threshold for how much output (energy per time unit) or how much power (mass or inertia multiplied by acceleration) the waves can impose on the wave-power plant and its components. US 4228360 does not mention overload protection of float and winch system and energy-storage system. Overload protection is only considered for the flywheel (50), and only in the form of protection against being supplied with more energy when the energy content in the flywheel exceeds a certain limit and not in the form of overload protection against being supplied with too great an output (energy per time unit) or from being influenced by excessive forces.

The fact that the disengagement mechanism in US 4228360 deals with limiting the amount of stored energy in the flywheel is directly expressed in patent claim 4 (page 10, line 41 and following):
"4. The apparatus as defined in claim 1 which further comprises: clutch means (...); and clutch control means connected to said clutch means and responsive to said flywheel governor means do disengage said clutch means when a selected amount of energy is stored in said energy storage flywheel."

The disengagement mechanism in US 4228360 sets a limit for how much energy, in the form of rotating kinetic energy, the flywheel (50) may contain. It sets no limit for how great an output or how great forces it is possible for the waves to channel into the mechanical energy store. Under given circumstances it may lead to overload. The disengagement mechanism only comes into effect after any overload forces and overload output have been channelled into and through the mechanical energy store. US 4228360 protects the flywheel (50) against the storage of too much rotating kinetic energy. However, neither the flywheel nor any of the energy-transmitting components in the system, from float assy (2) to and including flywheel (50) are in any way protected against excessive forces or excessive output transmission from the waves. Disengagement of the clutch (70) only occurs when the flywheel has been pre-saturated with energy according to the disengagement velocity of the flywheel determined by the flywheel governor (80).

Nor does the system described in US 4228360, as it is proposed to be designed, give any inadvertent overload protection, for before the flywheel governor (80) can come into operation, the whole mechanical restructuring and energy-storage machinery has to be accelerated to a given disengagement velocity. Since it is proposed that this machinery should contain a heavy mechanical spring: "heavy-duty spiral spring" (page 5, line 19) with energy-storage capacity for half the wave cycle, together with several gears, one of which is proposed with a gear-up factor of 1 to 40 (page 7, line 14) and a flywheel on the fastest rotating axle, there is an enormous inertia in the system from the cable drum (12) up to and including the flywheel (50). Before the flywheel has reached the disengagement velocity, the waves will have had abundant opportunity to subject wire, winch and the mechanical energy store to forces and output influxes which in practice are only limited by the potential in the waves themselves.

Thus the components in the power plant (wire, winch, axles, gear etc.) must be of sufficiently robust design to withstand the extreme forces and the enormous energy flux which such a system can and will absorb from an extreme wave.

### Description of wave-power technology

The invention will now be described in more detail by means of examples of embodiments and with reference to the accompanying figures.
Figure 1a illustrates the principle of the device according to the invention.
Figure 1b illustrates an exemplary embodiment according to the invention of winch, winch axle and slip clutch for setting the threshold for maximum transmissible output.
Figure 2 illustrates an embodiment of a slip clutch type I, designed with two arms.
Figure 3 illustrates an embodiment of an absorption element (floating buoy).
Figure 4 illustrates an embodiment of a winch unit with wire, anchor construction on seabed and absorption element.
Figure 5 illustrates an embodiment of a winch unit with submerged buoyancy body and an embodiment of a tightening system.
Figure 6 illustrates a second embodiment of a tightening system with two winch units with submerged buoyancy body.
Figure 7 illustrates a second embodiment of a slip clutch type I with plate clutch surfaces.

### Transmission system with built-in slip clutch

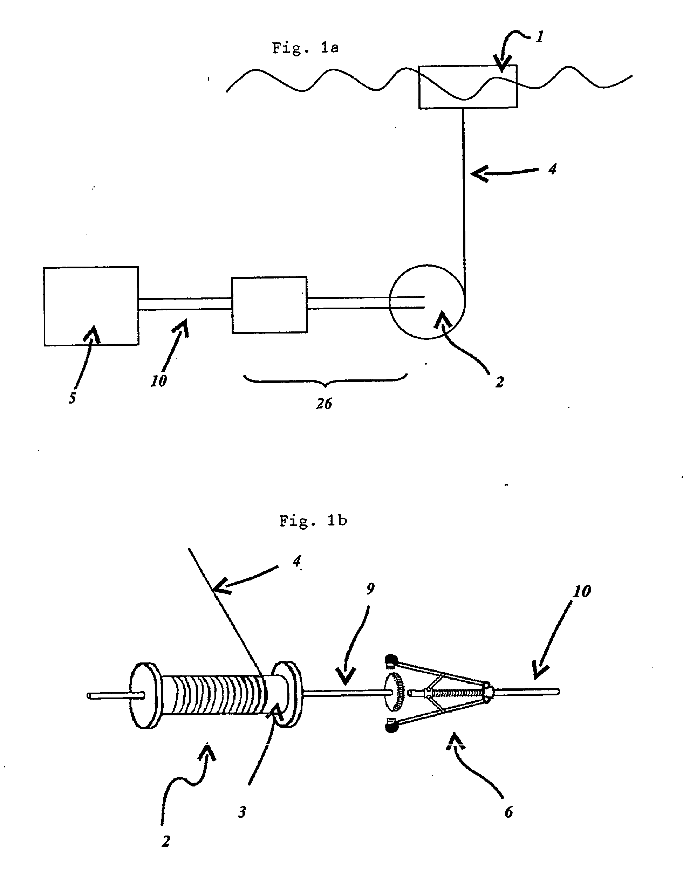

Figure 1a illustrates the principle of the device according to the invention. An absorption element 1, which is a floating body, is anchored by wire 4 to a winch 2 with a cable drum 3 in such a manner that the cable drum 3 is forced to rotate when the wave forces move the absorption element 1 in the winch wire's 4 longitudinal direction. The winch 2 may, for example, be anchored to the seabed, be located on land or floating in the water integrated in an absorption element 1. The energy absorbed from the waves in this manner is transmitted in the form of rotating motion from the cable drum to restructuring machinery 5, converting the absorbed energy into mechanical stored energy. This mechanical stored energy may, for example, be in the form of m × g × h (the product of mass, acceleration due to gravity and vertical height), p × V (pressure multiplied by volume), or ½ × I × ω² (moment of inertia multiplied by the square of angular velocity divided by 2). The restructuring machinery is not discussed further below as this is not the subject of the patent.

The transmission of energy from the winch 2 to the restructuring machinery is conducted via a transmission system 26 and an outgoing axle 10 which are interconnected.

The transmission system 26 comprises a clutch (not illustrated in figure 1a) which slips if the output, in the form of the product of rotating speed and torsional force (angular velocity multiplied by torque), which is being attempted to be transmitted from the cable drum to the restructuring machinery, exceeds a certain value. This means that output will always be transmitted to the restructuring machinery, but that this output will not exceed the threshold value/limit of tolerance of the restructuring machinery.

A principle for design of such a slip clutch for limiting maximum permitted transmitted output involves allowing the clutch to slip as the rotational speed (angular velocity) of the clutch's outgoing axle reaches a certain level. The slip clutch thereby provides an upper limit for how fast the rotating motion which is directed into the restructuring machinery can be. Figures 1b, 2 and 7 illustrate examples of embodiments of slip clutches according to this principle.

In these embodiments the slip clutch 6 comprises adjacent friction surfaces 8, 7a-b on an incoming axle 9 and an outgoing axle 10 respectively, and these adjacent friction surfaces are pressed against each other. The compressive force, however, is not constant. It is regulated as a function of the outgoing axle's rotational speed by means of the centrifugal forces acting on the clutch when it rotates. When the rotational speed on the outgoing axle exceeds a certain, precalibrated threshold value, the centrifugal forces will ensure that the adjacent friction surfaces are disengaged from each other, but only just, with the result that the transmitted rotational speed remains equal to the threshold value as long as the incoming rotational speed is higher than or equal to the threshold value. While the rotational speed is lower than the threshold value, the slip clutch will act as a fixed clutch.

The adjacent friction surfaces will become worn down over time when the wave-power plant is in operative condition. They should therefore be replaceable like the plates on a car clutch. The robustness of the system is further reinforced by the mechanism which presses together the replaceable friction surfaces 7a-b, 8 coming to a stop when the distance between the pedestal surfaces 11a-b and 12 on which the replaceable friction surfaces are attached becomes smaller than a certain number of millimetres. When/if the friction surfaces then become completely worn down, the clutch will slip so much that virtually no transmission takes place of rotational motion to the outgoing axle.

The effect of the above-described robustness-reinforcing arrangement is as follows: as the friction surfaces become worn, the efficiency of the system will gradually be reduced, instead of the system being exposed to even greater wear due to the wear. In other words: the arrangement causes wear to become wear-limiting.

In practice a slip clutch which slips when the rotational speed is too high could be constructed in various ways. In the examples in this document, the feedback mechanism which provides varying coupling/degree of disengagement is specified as a flywheel governor, inspired by the famous rotating steam pressure governor which James Watt used in his epoch-making steam engine in the 18^{th} century, and which before that was employed to regulate the compressive force between the millstones in windmills (although coupled in the opposite manner in this case, so that the compressive force between the millstones increased when the windmill's speed increased). It is essential for this flywheel governor to be mounted in such a way that its rotational speed is dependent on the *outgoing* axle's rotational speed, and not the incoming axle's rotational speed. (The outgoing axle is the axle to which the output is transmitted. The incoming axle is the axle from which the output is transmitted). In this document "disengagement" refers to a mechanism for varying coupling. A possible design involves allowing a spring device 13 to press the clutch surfaces 7a-b, 8 against each other, see Figure 2 and Figure 7. Two or more raisable arms 14a-b with a certain mass, possibly with a lead weight 15a/b at the end of each arm, are attached on opposite sides of outgoing axle 10. When the arms are lifted up from the outgoing axle, the clutch surfaces are pulled away from each other. In this way the centrifugal forces will cause the clutch to slip when the outgoing axle's rotation reaches a specific threshold velocity. With this relevant design, an additional functionality is achieved: the raisable arms 14a-b help to stabilise the outgoing axle's rotational speed when the threshold velocity has been achieved. This is because the angular velocity of the rotating mass is altered as a function of the variation of the radius when the arms are raised and lowered.

It is also possible to envisage an electronically controlled feedback mechanism, where a motor or an electromagnet with variable strength arranges for the compressive force in the clutch to be adjusted according to the rotational speed which the outgoing axle has at any time.

A wave-power-operated winch with slip clutch for setting the threshold of maximum transmissible output will be able to be constructed in a great many different variants. In addition to the slip clutch 6, the transition between cable drum 3 and outgoing axle 10 may contain one or more axles with associated clutches, for example a free-wheel (one-way clutch), and possibly one or more gears in some form or other.

The clutch types described above, both the mechanically designed slip clutch and the electronically controlled feedback mechanism, are slip clutches whose mode of operation is **characterised in that** they set an upper limit for how fast the outgoing axle can rotate. Transmitted output is equal to the product of transmitted angular velocity and transmitted torque. By setting a threshold for how high velocity is permitted to be transmitted in the rotating clutch, a threshold is simultaneously set for many watts of power output can be channelled into the restructuring machinery, given that the resistance offered by the restructuring machinery (the torque acting on the outgoing axle 10) is constant when the rotational speed is constant.

A simpler, though less wear-resistant alternative, involves the use of an ordinary slip clutch where the compressive force between the clutch surfaces is fixed, thereby setting an upper limit for how powerful rotation (how great torque) can be transmitted. For the restructuring machinery the outcome of this will be the same, viz. that the output channelled into the restructuring machinery cannot be greater than the threshold value determined by the product of transmitted angular velocity and torque.

Regardless of the design, the basic concept is that the wave-power plant should be capable of withstanding the worst extreme waves because it does not try to *resist* the waves when the wave forces therein become too great, but instead gives way and allows most of the output in the extreme waves, the destructive energy peaks, to pass and remain in the sea.

### Design of the absorption element

The absorption element is anchored at the end of the wire 4 which runs in and out on the aforementioned winch 2. Amongst the multitude of possible designs of the absorption element, the following is a suitable example: a tubular or sausage-shaped floating body 1 is anchored by two equally long upper wires 16a-b, one at each end of the floating body, see Figure 3. The opposite ends of the upper wires (the ends which are not anchored to the floating body) meet at a central connecting point 17. When the wave-power plant is in operative condition, the central connecting point will be located below the ocean surface. From the central connecting point a main wire descends towards the seabed. (This main wire is the same as the winch wire 4). The actual winch may be located on the seabed. The winch wire 4 will then run directly from the winch vertically upwards to the central connecting point 17. Alternatively, the winch may be located on shore, in which case the winch wire may run from the winch through a pulley 18 anchored on the seabed before extending up to the central connecting point.

With a tubular or sausage-shaped floating body of this kind, doubly moored by two upper wires attached to a central connecting point further anchored by the main wire, the floating body will normally be positioned with the broadside *along* the wave front, regardless of wave front direction. This provides the greatest possible energy absorption. In one embodiment, in *one* of the upper wires a weak link 19 is inserted, which is weaker than the other elements in the wire and mooring system. The weak link 19 may be formed by changing the diameter of one of the upper wires, connecting one of the upper wires to a material with different breaking strength, etc. The effect of this is as follows: if the wave forces become too violent, causing something to break, it is this weak link that breaks first. The floating body will then take up a position with the broadside *across* the wave front. The floating body's capability - and possibility - of absorbing energy from the ocean waves thereby becomes substantially less. This should have the effect of reducing the extent of the damage in the event of sea damage.

In one embodiment of the invention, between main wire 4 and central connecting point 17, a strong shock-absorbing spring 20 is inserted which is intended to take up the strain of powerful jerks in the wire during start-up, i.e. at the beginning of a wave cycle during periods of violent waves. The shock-absorbing spring is designed so as to compensate for undesirable inertia in the system due to movable mass elements which are set in motion at the start of each wave cycle: wire, cable drum, axles, any gears, slip clutch, etc.

### Design of a wave-power plant with winch, transmission system and restructuring machinery located on shore

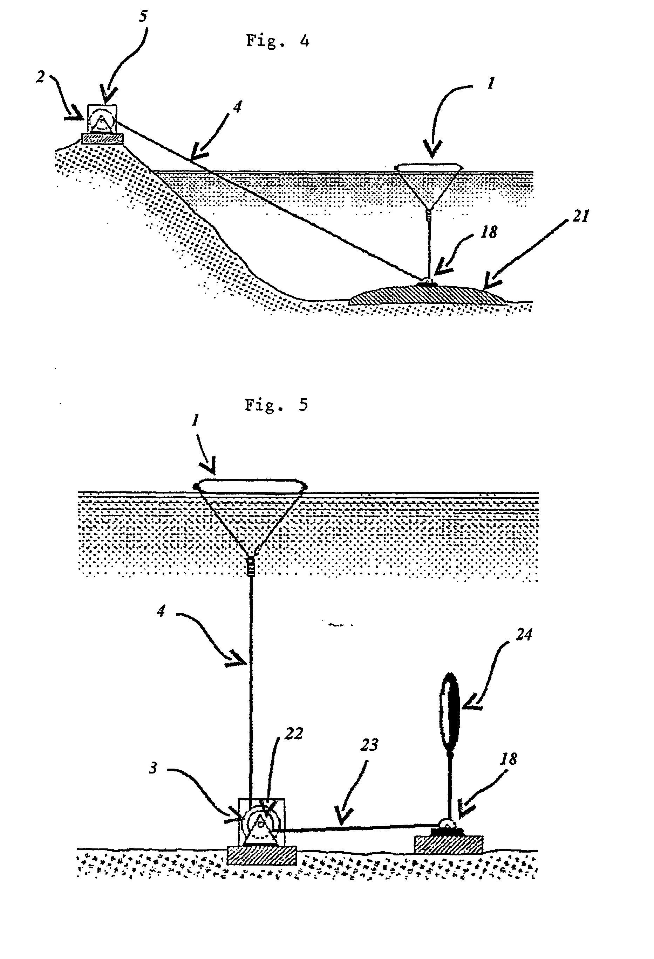

See Figure 4. In this design, the wave-power plant consists of the following parts:
- A floating wire-anchored absorption element 1.
- A pulley 18 attached to an anchor 21 on the seabed.
- A winch 2 which arranges for the transmission of power motion absorbed by the absorption element to restructuring machinery 5 via a transmission system containing a slip clutch as described under the section "Transmission system with built-in slip clutch" above.

The absorption element may be designed as described in the section "Design of absorption element" and as illustrated in Figure 3, or it may take any form whatever as long as it floats and is wire-anchored. The pulley 18 is attached to an anchor base 21 located on the seabed. The winch wire 4 extends slantingly downwards from the shore out into the water, down to the seabed where it runs through the pulley 18 and subsequently vertically upwards towards the surface where it anchors the absorption element 1.

### Design of the winch tightening system

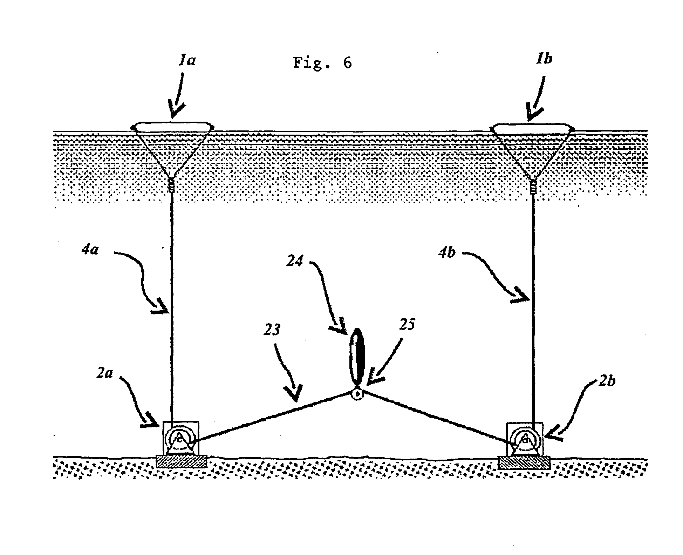

A wave-power-operated winch as described in this document will not work without a system for tightening the winch. There are several different system solutions to choose among. A hydraulic accumulator will be a suitable alternative. Other possible system solutions are as follows (not listed in order of priority):
1. Tightening of winch wire by means of self-tightening mechanical spring device.
2. Tightening of winch wire by means of reverse-wound tightening wire with a buoyancy body submerged in water attached to the end. See Figure 5.
3. Based on 2, but where two winches share the same buoyancy body. See Figure 6.

### Tightening system solution 1 (not shown):

The winch is tightened by an inbuilt/integrated mechanical spring device which is arranged so that the spring is tightened as the winch wire is pulled out. When the force/forces pulling out the winch wire cease or decrease sufficiently, the spring system will arrange for the winch to be rewound. The spring is strong enough to keep the winch wire 4 taut.

### Tightening system solution 2 (Figure 5):

This system solution is most practical if the winch is placed on the seabed, see Figure 5, but it is not essential for the winch to be placed in this manner. The winch may also be located on shore. A tightening wire 23 is reeled in on a tightening drum located on the same axle as the cable drum. The tightening drum has *a smaller radius* than the cable drum. The tightening wire 23 and the main wire 4 are wound in on their respective drums *in the opposite direction to each other*: if the main wire is wound in in a clockwise direction, the tightening wire has to be wound in in an counterclockwise direction, and vice versa. The tightening wire runs through a pulley 18 anchored to the seabed. The pulley is fixed to an anchor base 21 which, if the winch is placed on the seabed, is horizontally displaced some distance from the winch. From there the tightening wire extends vertically for some distance upwards in the water where its end is attached to a buoyancy body 24, which is pure and simply an oblong bouy or hose-shaped body whose specific weight is lighter than sea water. The buoyancy body is completely submerged in the water, and located so far below the surface that it is not appreciably influenced by the wave motion. If the main wire 4 is pulled out as a result of the wave motion in the ocean surface, this will cause the buoyancy body to be pulled down, but on account of its buoyancy it will attempt to float up towards the surface, thereby forcing the main wire to be reeled in again when the wave forces abate.

### Tightening system solution 3 (Figure 6):

Two winches 2a-b are placed on the seabed some distance from each other, each operating an absorption element 1a-b. Each has a tightening winch, but share tightening wire 23, as illustrated in Figure 6. In the same way as for tightening system solution 2, the tightening wire is reeled in on the tightening drums in the opposite direction to the main wires 4a-b. The tightening wire is tightened by a submerged buoyancy body 24 with a pulley 25 attached to the bottom. The tightening wire runs through this pulley. Having two winch units sharing a buoyancy body in this manner saves on building materials, thereby enabling costs to be cut.

### Reference terms used in the figures:

- 1: absorption element (floating body)
- 2: winch
- 3: cable drum
- 4: winch wire (main wire)
- 5: restructuring machinery
- 6: slip clutch for setting threshold of maximum transmissible output
- 7: (a-b) friction surface(s) attached to outgoing axle
- 8: friction surface attached to incoming axle
- 9: incoming axle / winch axle / axle ahead of outgoing axle
- 10: outgoing axle
- 11: (a-b) pedestal surface(s) attached to outgoing axle
- 12: pedestal surface attached to incoming axle
- 13: spring device
- 14: (a-b) raisable arms on outgoing axle
- 15: (a-b) lead weight on the raisable arms
- 16: (a-b) upper wires
- 17: central connecting point
- 18: pulley on the seabed
- 19: weak link
- 20: shock-absorbing spring
- 21: anchor construction on the seabed / anchor base
- 22: tightening drum
- 23: tightening wire
- 24: buoyancy body
- 25: pulley attached to the buoyancy body
- 26: transmission system

## Claims

1. A device for a wave-power plant comprising a self-tightening winch (2) with a winch wire (4), where the winch wire is connected to a wave-power-operated absorption element (1) at one end and to the self-tightening winch's cable drum (3) at the other end and the cable drum is connected via a transmission system (26) to an outgoing axle (10) which is further connected to an energy-storing restructuring machinery (5), where movement of the absorption element results in rotation of the cable drum and transmission of mechanical energy from the cable drum to the rotating outgoing axle (10) and to the restructuring machinery (5), **characterised in that** the transmission system (26) comprises a slip clutch (6) connected to the outgoing axle, which protects the components in the wave-power plant, particularly the components in the restructuring machinery, against overload in the event of large wave amplitude, where the slip clutch's engagement varies depending on the outgoing axle's rotational speed or torque, thereby providing a maximum threshold for how great an amount of energy per time unit can be transmitted to the outgoing axle and to the energy-storing restructuring machinery.

2. A device according to claim 1,
**characterised in that** the cable drum's axle is connected to an intermediate axle through one or more gears, and possibly a free-wheel (one-way clutch) before or between or after the gears, and where the intermediate axle is further connected to the outgoing axle via a slip clutch as described in claim 1.

3. A device according to claims 1 and 2,
**characterised in that** the slip clutch is of such a nature that it slips if the angular velocity (rotational speed) which is being attempted to be transmitted to the outgoing axle exceeds a predetermined threshold value.

4. A device according to claims 1 and 2,
**characterised in that** the slip clutch is of such a nature that it slips if the torque which is being attempted to be transmitted exceeds a predetermined threshold value.

5. A device according to claims 1-3,
**characterised in that** the slip clutch comprises adjacent clutch surfaces (8 and 7) on an incoming axle (9) and an outgoing axle (10) respectively which are pressed against each other by means of spring force from a spring device (13), and in connection with the outgoing axle a clutch mechanism consisting of two or more raisable arms (14a-b) attached to the outgoing axle, each with a lead weight outermost at the end (15a-b), which is pressed in towards the axis by means of the force from the said spring device, whereby the compressive force between the adjacent clutch surfaces (8 and 7) is adjusted as a function of the centrifugal forces acting on the arms (14a-b) and the weights (15a-b) in such a manner that the compressive force in the clutch decreases when the outgoing axle's rotational speed increases.

6. A device according to claims 1-3,
**characterised in that** the slip clutch is a clutch mechanism where the degree of engagement is adjusted by means of an electronic regulating system connected to the outgoing axle (10), with the result that the compressive force between the clutch surfaces decreases as the outgoing axle's rotational speed increases.

7. A device according to claims 1, 2, 3 and 5,
**characterised in that** the adjacent clutch surfaces (7, 8) are replaceable and attached to respective pedestal surfaces (11, 12), and where the mechanism which presses the clutch surfaces against each other contains a blocking means which prevents the pedestal surfaces from coming into contact with each other if/when the replaceable clutch surfaces become completely worn down.

8. A device according to claims 1-7,
**characterised in that** the absorption element (1) is connected via a shock-absorbing spring (20) to the wire (4) which is reeled in on the cable drum, whereby the shock-absorbing spring has the effect of taking up the strain of jerks in the wire.

9. A device according to claims 1-8,
**characterised in that** the absorption element is a sausage-shaped floating absorption element (1) doubly moored at each end by two upper wires (16a, 16b) which are attached with their opposite wire ends in a central connecting point (17) which is further connected via a shock-absorbing spring (20) to wire (4) which is reeled in on the winch.

10. A device according to claim 9, where there is incorporated in one of the two upper wires (16b) a weak link (19) which is weaker than the other mooring elements, with the result that it is this weak link and nothing else which is the first to break in the event of overloading.

11. A device according to claims 1-10,
**characterised in that** the absorption element is connected by wire (4) via a pulley (18) attached to an anchor (21) on the seabed, to the winch (2) located on shore connected to a transmission system (26).

12. A device according to claims 1-10,
**characterised in that** the winch (2) is self-tightening, being tightened by an inbuilt mechanical spring system or the like.

13. A device according to claims 1-10,
**characterised in that** the winch (2) is self-tightening, being tightened by a submerged buoyancy body (24) attached to a tightening wire (23) reeled in on a tightening drum whose radius is smaller than the cable drum's, where the tightening drum is fixed to the same axle as the cable drum and where the tightening wire is reeled in on the winch in the opposite direction of the winch wire (4), the tightening wire running from the winch (2) through a pulley (18) attached to an anchor on the seabed, before extending vertically up to the buoyancy body (24).

14. A device according to claims 1-10,
**characterised in that** two winches (2a-b) are provided located on the seabed horizontally displaced some distance from each other, both winches being tightened by one and the same buoyancy body (24) with a pulley (25), where a reverse-wound tightening wire (23), which is common to the two winches, runs through the pulley, thereby ensuring that both the winch wires (4a-b) are kept taut.

## Patentansprüche

1. Vorrichtung für ein Wellenkraftwerk, welche eine selbststraffende Winde (2) mit einem Windenseil (4) hat, wobei das Windenseil an einem Ende mit einem Wellenenergie-betriebenen Absorptionselement (1) und an dem anderen Ende mit einer selbststraffenden Windenseiltrommel (3) verbunden ist, und wobei die Seiltrommel über ein Übertragungssystem (26) mit einer Ausgangs-Achse (10) verbunden ist, welche ferner mit einer Energiespeicher-Umstellungsmaschine (5) verbunden ist, wobei die Bewegung des Absorptionselements zu einer Umdrehung von der Kabeltrommel und einer Übertragung von mechanischer Energie von der Kabeltrommel zu der umdrehenden Ausgangs-Achse (10) und zu der Umstellungsmaschine (5) führt, **dadurch gekennzeichnet, dass** das Übertragungssystem (26) eine Rutschkupplung (6) enthält, welche mit der Ausgangs-Achse verbunden ist, welche die Bauteile in dem Wellenkraftwerk, insbesondere die Bauteile in der Umstellungsmaschine, gegen eine Überlastung bei dem Ereignis einer hohen Wellenamplitude schützt, wobei die Ineingriffnahme der Rutschkupplung in Abhängigkeit von der Umdrehungsgeschwindigkeit oder dem Drehmoment von der Ausgangs-Achse variiert, wodurch ein maximaler Schwellwert hinsichtlich dessen, wie hoch eine Energiemenge pro Zeiteinheit an die Ausgangs-Achse und die Energiespeicher-Umstellungsmaschine übertragen werden kann, bereitgestellt wird.

2. Vorrichtung nach Anspruch 1,
**dadurch gekennzeichnet, dass** die Achse von der Seiltrommel über ein oder mehrere Zahnräder und möglicherweise über einen Freilauf (Einwegekupplung) vor oder zwischen oder hinter den Zahnrädern mit einer Zwischenachse verbunden ist, und wobei die Zwischenachse ferner über eine Rutschkupplung, wie in Anspruch 1 beschrieben, mit der Ausgangs-Achse verbunden ist.

3. Vorrichtung nach Anspruch 1 oder 2,
**dadurch gekennzeichnet, dass** die Rutschkupplung dazu ausgelegt ist, dass sie rutscht, wenn die Winkelgeschwindigkeit (Drehgeschwindigkeit), welche an die Ausgangs-Achse zu übertragen ist, einen vorbestimmten Schwellwert übersteigt.

4. Vorrichtung nach Anspruch 1 und 2,
**dadurch gekennzeichnet, dass** die Rutschkupplung dazu ausgelegt ist, dass sie rutscht, wenn das Drehmoment, welches zu übertragen ist, einen vorbestimmten Schwellwert übersteigt.

5. Vorrichtung nach einem der Ansprüche 1 bis 3,
**dadurch gekennzeichnet, dass** die Rutschkupplung an einer Eingangs-Achse (9) und einer Ausgangs-Achse (10) jeweils angrenzende Kupplungsoberflächen (8 und 7) enthält, welche mittels einer Federkraft von einer Federvorrichtung (13) zueinander gedrückt werden, und in Verbindung mit der Ausgangs-Achse einen Kupplungsmechanismus enthält, welcher zwei oder mehrere anhebbare Ausleger (14a-b) enthält, welche mit der Ausgangs-Achse verbunden sind, wobei jeder davon an dem äußersten Ende (15a-b) ein Bleigewicht enthält, welches mittels der Kraft von der Federvorrichtung zu der Achse gedrückt wird, wobei die Kompressionskraft zwischen den angrenzenden Kupplungsoberflächen (8 und 7)als eine Funktion von den Zentrifugalkräften eingestellt ist, welche auf die Ausleger (14a-b) und die Gewichte (15a-b) auf eine solche Art und Weise wirken, dass die Kompressionskraft in der Kupplung abnimmt, wenn die Umdrehungsgeschwindigkeit der Ausgangs-Achse zunimmt.

6. Vorrichtung nach einem der Ansprüche 1 bis 3,
**dadurch gekennzeichnet, dass** die Rutschkupplung ein Kupplungsmechanismus ist, bei welchem der Ineingriffnahmegrad mittels eines elektronischen Regelsystems eingestellt ist, welches mit der Ausgangs-Achse (10) verbunden ist, woraus resultiert, dass die Kompressionskraft zwischen den Kupplungsoberflächen abnimmt, wenn die Umdrehungsgeschwindigkeit von der Ausgangs-Achse zunimmt.

7. Vorrichtung nach einem der Ansprüche 1, 2, 3 und 5,
**dadurch gekennzeichnet, dass** die angrenzenden Kupplungsoberflächen (7, 8) austauschbar sind und an jeweiligen Sockeloberflächen (11, 12) befestigt sind, und wobei der Mechanismus, welcher die Kupplungsoberflächen zueinander hindrückt, ein Blockierungselement enthält, welches verhindert, dass die Sockeloberflächen miteinander in Kontakt treten, wenn die austauschbaren Kupplungsoberflächen vollständig abgenutzt sind.

8. Vorrichtung nach einem der Ansprüche 1 bis 7,
**dadurch gekennzeichnet, dass** das Absorptionselement (1) über eine Stoßabsorptionsfeder (20) mit dem Seil (4) verbunden ist, welches auf der Seiltrommel aufgespult ist, wobei die Stoßabsorptionsfeder dazu ausgelegt ist, Erschütterungsbelastungen in dem Seil aufzunehmen.

9. Vorrichtung nach einem der Ansprüche 1 bis 8,
**dadurch gekennzeichnet, dass** das Absorptionselement ein wurstförmiges Schwimmabsorptionselement (1) ist, welches an jedem Ende durch zwei obere Seile (16a, 16b) doppelt befestigt ist, welche an ihren gegenüberliegenden Seilenden an einem zentralen Verbindungspunkt (17) befestigt sind, welcher ferner über eine Stoßabsorptionsfeder (20) mit dem Seil (4), welches auf der Winde aufgespult ist, verbunden ist.

10. Vorrichtung nach Anspruch 9, wobei ein Schwächungsglied (19) an einem der zwei oberen Seilen (16b) enthalten ist, welches schwächer als die weiteren Befestigungselemente ist, woraus resultiert, dass nur dieses Schwächungsglied im Falle einer Überlastung als Erstes zerbricht.

11. Vorrichtung nach einem der Ansprüche 1 bis 10,
**dadurch gekennzeichnet, dass** das Absorptionselement über eine Seilrolle (18), welche an einer Verankerung (21) auf dem Meeresgrund verbunden ist, durch das Seil (4) mit der Winde (2) verbunden ist, welche am Ufer positioniert ist, und welche mit einem Übertragungssystem (26) verbunden ist.

12. Vorrichtung nach einem der Ansprüche 1 bis 10,
**dadurch gekennzeichnet, dass** die Winde (2) selbststraffend ist, wobei sie durch ein eingebautes mechanisches Federsystem oder dergleichen gestrafft wird.

13. Vorrichtung nach einem der Ansprüche 1 bis 10,
**dadurch gekennzeichnet, dass** die Winde (2) selbststraffend ist, wobei sie durch einen untergetauchten Auftriebskörper (24) gestrafft wird, welcher an einem Straffungsseil (23) befestigt ist, welches auf einer Straffungs-Trommel aufgespult ist, deren Radius kleiner als jener von der Seiltrommel ist, wobei die Straffungs-Trommel an derselben Achse wie die Seiltrommel befestigt ist, und wobei das Straffungsseil auf der Winde in entgegengesetzter Richtung zum Windenseil (4) aufgewickelt ist, wobei das Straffungsseil von der Winde (2) über eine Seilrolle (18), welche an einer Verankerung am Meeresgrund befestigt ist, verläuft, bevor es sich vertikal nach oben zu dem Auftriebskörper (24) erstreckt.

14. Vorrichtung nach einem der Ansprüche 1 bis 10,
**dadurch gekennzeichnet, dass** zwei Winden (2a-b) bereitgestellt sind, welche um eine gewisse Distanz voneinander horizontal versetzt am Meeresgrund positioniert sind, wobei beide Winden durch eine Seilrolle (25) durch ein und denselben Auftriebskörper (24) gestrafft werden, wobei ein umgekehrt aufgewickeltes Straffungsseil (23), welches über die zwei Winden verläuft, durch die Seilrolle verläuft, wodurch sichergestellt wird, dass beide Windenseile (4ab) straff gehalten werden.

## Revendications

1. Dispositif pour une centrale houlomotrice comprenant un treuil autoserrant (2) avec un câble de treuil (4), où le câble de treuil est raccordé à un élément d'absorption actionné par l'énergie houlomotrice (1) à une extrémité et au tambour de câble du treuil autoserrant (3) à l'autre extrémité et le tambour de câble est raccordé par l'intermédiaire d'un système de transmission (26) à un axe de sortie (10) qui est lui-même raccordé à une machinerie de restructuration de stockage d'énergie (5), où le déplacement de l'élément d'absorption conduit à la rotation du tambour de câble et la transmission d'énergie mécanique du tambour de câble à l'axe de sortie tournant (10) et à la machinerie de restructuration (5), **caractérisé en ce que** le système de transmission (26) comprend un limiteur de couple à friction (6) raccordé à l'axe de sortie, qui protège les composants dans la centrale houlomotrice, en particulier les composants dans la machinerie de restructuration, contre une surcharge en cas de grande amplitude des vagues, où l'engagement du limiteur de couple à friction varie suivant la vitesse ou le couple de rotation de l'axe de sortie, de manière à produire une limite maximale pour la quantité d' énergie par unité de temps qui peut être transmise à l'axe de sortie et à la machinerie de restructuration de stockage d'énergie.

2. Dispositif selon la revendication 1, **caractérisé en ce que** l'axe du tambour de câble est raccordé à un axe intermédiaire par l'intermédiaire d'un ou plusieurs engrenages, et éventuellement d'une roue libre avant ou entre ou après les engrenages, et ou l'axe intermédiaire est lui-même raccordé à l'axe de sortie par l'intermédiaire d'un limiteur de couple à friction comme décrit dans la revendication 1.

3. Dispositif selon les revendications 1 et 2, **caractérisé en ce que** le limiteur de couple à friction est de telle nature qu'il glisse si la vitesse angulaire (vitesse de rotation) qu'il est tenté de transmettre à l'axe de sortie dépasse une valeur limite prédéterminée.

4. Dispositif selon les revendications 1 et 2, **caractérisé en ce que caractérisé en ce que** le limiteur de couple à friction est de telle nature qu'il glisse si le couple qu'il est tenté de transmettre dépasse une valeur limite prédéterminée.

5. Dispositif selon les revendications 1 à 3, **caractérisé en ce que** le limiteur de couple à friction comprend des surfaces d'embrayage adjacentes (8 et 7) sur un axe d'entrée (9) et un axe de sortie (10) respectivement qui sont pressés l'un contre l'autre au moyen d'une force de ressort d'un dispositif à ressort (13), et en ce qui concerne l'axe de sortie un mécanisme d'embrayage constitué de deux bras relevables (14a-b) reliés à l'axe de sortie, chacun avec un lest à l'extrémité (15a-b), qui est pressé vers l'axe au moyen de la force dudit dispositif à ressort, de telle manière que la force de compression entre les surfaces d'embrayage adjacentes (8 et 7) soit ajustée en fonction des forces centrifuges exercées sur les bras (14a-b) et les poids (15a-b) de telle manière que à force de compression dans l'embrayage diminue lorsque la vitesse de rotation de l'axe de sortie augmenté.

6. Dispositif selon les revendications 1 à 3, **caractérisé en ce que** le limiteur de couple à friction est un mécanisme d'embrayage dans lequel le degré d'engagement est ajusté au moyen d'un système de régulation électronique raccordé à l'axe de sortie (10), en conséquence de quoi la force de compression entre les surfaces d'embrayage diminue lorsque la vitesse de rotation de l'axe de sortie augmente.

7. Dispositif selon les revendications 1, 2, 3 et 5, **caractérisé en ce que** les surfaces d'embrayage adjacentes (7, 8) sont remplaçables et reliées à des surfaces de socle respectives (11,'12), et où le mécanisme qui presse les surfaces d'embrayage l'une contre l'autre contient un moyen de blocage qui empêche les surfaces de socle d'entrer en contact mutuel si/lorsque les surfaces d'embrayage remplaçables deviennent totalement usées.

8. Dispositif selon les revendications 1 à 7, **caractérisé en ce que** l'élément d'absorption (1) est raccordé par l'intermédiaire d'un ressort amortisseur de choc (20) au câble (4) qui est enroulé sur le tambour de câble, de telle manière que le ressort amortisseur de choc ait pour effet d'absorber l'effort de saccades dans le câble.

9. Dispositif selon les revendications 1 à 8, **caractérisé en ce que** l'élément d'absorption est un élément d'absorption flottant en forme de saucisse (1) doublement amarré à chaque extrémité par deux câbles supérieurs (16a, 16b) qui sont reliés avec leurs extrémités de câble opposées à un point de raccordement central (17) qui est en outre raccordé par l'intermédiaire d'un ressort amortisseur de choc (20) au câble (4) qui est enroulé sur le treuil.

10. Dispositif selon la revendication 9, dans lequel il est incorporé dans un des deux câbles supérieurs (16b) une liaison faible (19) qui est plus faible que les autres éléments d'amarrage, en conséquence de quoi c'est la liaison faible et rien d'autre qui est la première à se rompre en cas de surcharge.

11. Dispositif selon les revendications 1 à 10, **caractérisé en ce que** l'élément d'absorption est raccordé par câble (4) par l'intermédiaire d'une poulie (18) reliée à une ancre (21) sur le lit marin, au treuil (2) situé sur le rivage raccordé à un système de transmission (26).

12. Dispositif selon les revendications 1 à 10, **caractérisé en ce que** le treuil (2) est autoserrant, étant serré par un système de ressort mécanique intégré ou similaire.

13. Dispositif selon les revendications 1 à 10, **caractérisé en ce que** le treuil (2) est autoserrant, étant serré par un corps flottant submergé (24) relié à un câble de serrage (23) enroulé sur un tambour de serrage dont le rayon est plus faible que celui du tambour de câble, où le tambour de serrage est fixé au même axe que le tambour de câble et où le câble de serrage est enroulé sur le treuil dans la direction opposée du câble de treuil (4), le câble de serrage s'étendant depuis le treuil (2) par l'intermédiaire d'une poulie (18) reliée à une ancre sur le lit marin, avant de s'étendre verticalement vers le corps flottant (24).

14. Dispositif selon les revendications 1 à 10, **caractérisé en ce que** deux treuils (2a-b) sont disposés sur le lit marin horizontalement déplacés à une certaine distance l'un de l'autre, les deux treuils étant serrés par un seul et même corps flottant (24) avec une poulie (25), où un câble de serrage à enroulement inverse (23), qui est commun aux deux treuils, s'étend par l'intermédiaire d'une poulie, de manière à assurer que les deux câbles de treuil (4a-b) soient maintenus en tension.
